# EUROPEAN PATENT APPLICATION

(11) **EP 4 664 664 A1**
(43) Date of publication of application: **17.12.2025**
(21) Application number: 24870426.4
(22) Date of filing: 09.09.2024
(51) Int. Cl.: H01M 50/543, H01M 50/533, H01M 50/536, H01M 50/176, H01M 50/14, H01M 50/126

(54) **BATTERY CELL, BATTERY, AND ELECTRIC DEVICE**

(30) Priority: 28.09.2023 CN 202322663035 U
(71) Applicant: Contemporary Amperex Technology Co., Limited, Ningde, Fujian 352100 (CN)
(72) Inventor: XIE, Yongfeng, Ningde, Fujian 352100 (CN); LI, Quankun, Ningde, Fujian 352100 (CN)
(74) Representative: Ran, Handong
(86) International application number: PCT/CN2024/117699
(87) International publication number: WO 2025/066881

(57) **Abstract**

A battery cell (20), a battery (100), and an electric device. The battery cell (20) comprises: an electrode lead-out portion (201), used for leading out the electric energy of the battery cell (20); electrode assemblies (22), each comprising a main body (222) and tabs (221), wherein each tab (221) comprises a transition portion (2211) and a connection portion (2212), the transition portion (2211) is bent relative to the connection portion (2212), the transition portion (2211) is connected between the main body (222) and the connection portion (2212), and the connection portion (2212) is adapted to be connected to the electrode lead-out portion (201); and insulating members (24), each arranged on the bent outer side of the corresponding tab (221), wherein each insulating member (24) comprises a first insulator (241), a second insulator (242), and a third insulator (243), the second insulator (242) is connected between the first insulator (241) and the third insulator (243), the first insulator (241) is fixed to the main body (222), the third insulator (243) is fixed to the electrode lead-out portion (201), and at least part of the transition portion (2211) is not fixed to the insulating member (24). The battery cell (20), the battery (100), and the electric device are beneficial to reducing the risk of tearing the tabs (221).

## Description

### CROSS-REFERENCE TO RELATED APPLICATIONS

The present application claims priority to Chinese Patent Application No. 202322663035.0, entitled "BATTERY CELL, BATTERY, AND ELECTRICAL APPARATUS" filed on September 28, 2023, the entire contents of which are incorporated herein by reference.

### TECHNICAL FIELD

Embodiments of the present application relate to the field of batteries, and in particular to a battery cell, a battery, and an electrical apparatus.

### BACKGROUND

Current secondary batteries mainly include a shell and an electrode assembly disposed inside the shell. The shell is provided with electrode terminals, and the electrode assembly is provided with tabs, the tabs being electrically connected to the electrode terminals. In the related art, insulating members are coated on the tabs to function to protect the tabs. However, after being coated with the insulating members, the problem of tab tearing may occur. Therefore, how to reduce tab tearing has become a new technical challenge.

### SUMMARY OF THE INVENTION

In view of this, embodiments of the present application provide a battery cell, a battery, and an electrical apparatus, which are beneficial for solving the problem of tab tearing caused by the adhesive force between insulating members and tabs during bending of the tabs.

In a first aspect, a battery cell is provided, including: an electrode lead-out portion configured to lead out electrical energy of the battery cell; an electrode assembly including a main body and a tab, where the tab includes a transition portion and a connection portion, the connection portion being configured to be connected to the electrode lead-out portion, the transition portion being connected between the main body and the connection portion, and the transition portion being bent relative to the connection portion; and an insulating member disposed on a bent outer side of the tab, the insulating member including a first insulator, a second insulator, and a third insulator, where the second insulator is connected between the first insulator and the third insulator, the first insulator is fixed to the main body, the third insulator is fixed to the electrode lead-out portion, and at least a portion of the transition portion is not fixed to the insulating member.

In the embodiment of the present application, by providing the second insulator between the first insulator and the third insulator to connect the first insulator and the third insulator together, the connection strength between the first insulator and the third insulator on the electrode assembly can be improved, thereby lowering the risk of detachment. Further, by configuring at least a portion of the transition portion of the tab not to be fixed to the insulating member, the pulling force applied by the insulating member to the tab can be reduced during bending of the tab, which is advantageous for mitigating the problem of tab tearing during bending of the tab.

In a possible implementation, at least a portion of the transition portion is not fixed to the second insulator.

In this embodiment, by configuring at least a portion of the transition portion of the tab not to be fixed to the second insulator, stress can be released from the tab during bending of the tab, so as to lower the pulling force applied by the insulating member to the tab, thereby lowering the risk of tab fracture.

In a possible implementation, the transition portion includes a first portion and a second portion, the first portion being connected to the main body, the second portion being connected between the connection portion and the first portion, an inner surface of the second portion being bent relative to an inner surface of the first portion, and the second portion not being fixed to the second insulator.

In this embodiment, since the connection site between the second portion and the connection portion serves as a bending point, configuring the second portion not to be fixed to the second insulator can release, as much as possible, the pulling force applied by the insulating member to the bent part of the tab, thereby lowering the risk of tearing the tab during bending of the tab as much as possible.

In a possible implementation, an entirety of the transition portion is not fixed to the second insulator.

In this embodiment, by configuring the entire transition portion not to be fixed to the second insulator, the pulling force applied by the insulating member to the tab can be substantially released during bending of the tab, thereby lowering the risk of tab fracture.

In a possible implementation, an edge portion of the connection portion that is connected to the transition portion is not fixed to the second insulator.

In this embodiment, by configuring not only the second portion not to be fixed to the second insulator but also the edge portion of the connection portion that is connected to the second portion not to be fixed to the second insulator, the pulling force applied by the insulating member to the tab can be better released, thereby further lowering the risk of tab fracture.

In a possible implementation, the first insulator is fixed to a first side surface of the main body, and in a direction perpendicular to the first side surface, a dimension of the edge portion is greater than or equal to 2 mm.

In this embodiment, by configuring the dimension of the edge portion to be greater than or equal to 2 mm, the pulling force applied by the insulating member to the tab can be further reduced, thereby lowering the risk of tab fracture.

In a possible implementation, the connection portion is welded to the electrode lead-out portion and forms a weld mark area on a surface of the electrode lead-out portion, and the third insulator covers the weld mark area.

In this embodiment, by configuring the third insulator to cover the weld mark area, the third insulator can retain metal debris within the weld mark area at the weld mark area, which is advantageous for lowering the probability of short circuits in the battery cell caused by escape of the metal debris.

In a possible implementation, the third insulator extends beyond the weld mark area.

In this embodiment, by configuring the third insulator to extend beyond the weld mark area, the metal debris within the weld mark area can be enclosed within the weld mark area, thereby lowering the probability of short circuits in the battery cell caused by escape of the metal debris.

In a possible implementation, the first insulator fixed to the first side surface of the main body is spaced apart from a first connection site, the first connection site being a connection site between an outer surface of the tab and the first side surface.

In this embodiment, since the first connection site is a stress concentration point between the tab and the main body, arranging the first insulator fixed to the first side surface to be spaced apart from the first connection site allows the first connection site to be covered by the second insulator and unfixed to the insulating member, thereby reducing, during bending of the tab, the pulling force applied by the insulating member to the first connection site, and consequently lowering the risk of tab fracture.

In a possible implementation, a distance from the first insulator to the first connection site is greater than or equal to 2 mm.

In this embodiment, by configuring the distance from the first insulator fixed to the first side surface to the first connection site to be greater than or equal to 2 mm, the pulling force applied by the insulating member to the tab can be further reduced, thereby lowering the risk of tab fracture.

In a possible implementation, the first insulator includes a first insulating layer and a first adhesive coating, and the third insulator includes a third insulating layer and a third adhesive coating, where the first insulating layer is bonded to the main body through the first adhesive coating, and the third insulating layer is bonded to the electrode lead-out portion through the third adhesive coating; and the second insulator includes a second insulating layer, where a surface of the second insulating layer that faces the tab is exposed.

In this embodiment, by configuring the surface of the second insulating layer that faces the tab to be exposed, at least a portion of the transition portion of the tab can be unfixed to the second insulator, which can consequently reduce, during bending of the tab, the pulling force applied by the insulating member to the tab, thereby lowering the risk of tab fracture. Additionally, the material usage of the adhesive coating can be reduced, thereby lowering costs.

In a possible implementation, the first insulator includes a first insulating layer and a first adhesive coating, the second insulator includes a second insulating layer and a second adhesive coating, and the third insulator includes a third insulating layer and a third adhesive coating; and the second insulator further includes a fourth insulating layer, where the fourth insulating layer is bonded to the second insulating layer through the second adhesive coating, and a surface of the fourth insulating layer that faces the tab is exposed.

In this embodiment, by bonding the fourth insulating layer to the second adhesive coating and exposing its surface facing the tab, a portion of the tab from the first connection site to the second connection site can be unfixed to the insulating member, which can consequently reduce, during unfolding, bending, or movement of the tab, the pulling force applied by the insulating member to the tab, thereby lowering the risk of tab fracture. Additionally, only a position corresponding to the portion of the tab from the first connection site to the second connection site needs to be attached with the fourth insulating layer, thereby reducing the manufacturing complexity of the insulating member.

In a possible implementation, the second insulator is of a transparent structure.

In this embodiment, by configuring the second insulator as a transparent structure, monitoring whether cracks develop in the tab is facilitated, thereby enabling timely screening of defective battery cells.

In a possible implementation, the first insulator and/or the third insulator is of a non-transparent structure.

In this embodiment, by configuring the first insulator and/or the third insulator as a non-transparent structure, recognition of the insulating member by a charge coupled device (CCD) camera is facilitated, thereby achieving the purpose of reducing repeated fixing of insulating members.

In a possible implementation, the electrode lead-out portion includes an electrode terminal, the electrode terminal being welded to the connection portion; or the electrode lead-out portion includes an electrode terminal and a connection member, where the connection portion is electrically connected to the electrode terminal through the connection member, and the connection portion is welded to the connection member.

In this embodiment, the electrode terminal is directly welded to the connection portion without the need of using a connection member for connection, enabling cost reduction while improving spatial utilization of the battery cell. Additionally, the connection portion is connected to the electrode terminal through the connection member, thereby facilitating the connection between the tab and the electrode terminal.

In a possible implementation, the electrode lead-out portion is disposed on a first wall of a shell of the battery cell, and the tab extends from a first end surface of the electrode assembly, the first end surface being disposed opposite to the first wall.

In this embodiment, by disposing the electrode lead-out portion on the first wall opposite to the first end surface, the space occupied by the tab can be significantly reduced.

In a second aspect, a battery is provided, including the battery cell provided in the first aspect.

In a third aspect, an electrical apparatus is provided, including the battery according to the second aspect, the battery being configured to supply electrical energy to the electrical apparatus.

### DESCRIPTION OF DRAWINGS

To more clearly describe the technical solutions of the embodiments of the present application, the drawings to be used in the embodiments of the present application will be briefly introduced below. Apparently, the drawings described below are merely some embodiments of the present application. For those of ordinary skill in the art, other drawings may also be obtained based on these drawings without making creative efforts.
FIG. 1 is a schematic structural diagram of a vehicle disclosed in an embodiment of the present application.
FIG. 2 is a schematic structural diagram of a battery disclosed in an embodiment of the present application.
FIG. 3 is a schematic exploded view of a battery cell disclosed in an embodiment of the present application.
FIG. 4 illustrates a schematic exploded view of a battery cell according to another embodiment of the present application.
FIG. 5 illustrates a schematic cross-sectional view of a battery cell according to an embodiment of the present application.
FIG. 6 illustrates a schematic enlarged view of portion A in FIG. 5.
FIG. 7 illustrates another schematic cross-sectional view of a battery cell according to an embodiment of the present application.
FIG. 8 illustrates a schematic cross-sectional view of an insulating member in an unfolded state according to an embodiment of the present application.
FIG. 9 illustrates a schematic cross-sectional view of another insulating member in an unfolded state according to an embodiment of the present application.

Description of reference numerals:
1 - vehicle; 80 - motor; 60 - controller; 100 - battery; 111 - first box body portion; 112 - second box body portion; 20 - battery cell; 211 - case; 212 - cover plate; 22 - electrode assembly; 23 - connection member; 24 - insulating member; 214 - electrode terminal; 214a - positive electrode terminal; 214b - negative electrode terminal; 221 - tab; 221a - first tab; 221b - second tab; 222 - main body; 2221 - first end surface; 2222 - first side surface; 2211 - transition portion; 2212 - connection portion; 201 - electrode lead-out portion; 202 - fusion zone; 203 - first connection site; 204 - second connection site; 205 - weld mark area; 241 - first insulator; 242 - second insulator; 243 - third insulator; 2411 - first insulating layer; 2412 - first adhesive coating; 2421 - second insulating layer; 2422 - second adhesive coating; 2431 - third insulating layer; 2432 - third adhesive coating; 2423 - fourth insulating layer; 2301 - first portion; 2302 - second portion; 401 - inner surface of the second portion; 402 - inner surface of the first portion; 403 - edge portion; 404 - outer surface of the tab; 405 - bending point; Y - unfolding direction of the insulating member.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. Based on the embodiments in the present application, all other embodiments obtained by those of ordinary skill in the art without creative effort fall within the protection scope of the present application.

Unless otherwise defined, all technical and scientific terms used in the present application shall have the same meanings as those generally understood by those skilled in the technical field to which the present application belongs. The terms used in the specification of the present application are merely for the purpose of describing specific embodiments and are not intended to limit the present application. The terms "include" and "have" and any variations thereof in the specification and claims of the present application and the above Description of Drawings are intended to cover non-exclusive inclusion. The terms "first," "second," etc. in the specification and the claims of the present application as well as the above drawings are used to distinguish different objects, rather than to describe a specific order or primary-secondary relationship.

Orientation words appearing in the following description are all directions shown in the drawings, and do not limit the specific structure of the present application. In the description of the present application, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skills in the art, the specific meanings of the above terms in the present application may be understood according to specific circumstances.

The reference to "embodiment" in the present application means that specific features, structures or characteristics described with reference to embodiments may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described in the present application may be combined with other embodiments.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the present application, "a plurality of" means two or more (including two), similarly, "a plurality of groups" means two or more groups (including two groups), and "a plurality of sheets" means two or more sheets (including two sheets).

In the embodiments of the present application, a battery cell may be a secondary battery. The secondary battery refers to a battery cell that, after being discharged, can activate an active material by charging for continued use.

The battery cell may be a lithium-ion battery, a sodium-ion battery, a sodium/lithium-ion battery, a lithium metal battery, a sodium metal battery, a lithium sulfur battery, a magnesium-ion battery, a nickel hydrogen battery, a nickel cadmium battery, a lead storage battery, and the like. The embodiments of the present application are not limited to this.

The battery cell generally includes an electrode assembly. The electrode assembly includes a positive electrode, a negative electrode and a spacer. During charging and discharging of the battery cell, active ions (such as lithium ions) are intercalated and deintercalated back and forth between the positive electrode and the negative electrode. The spacer is disposed between the positive electrode and the negative electrode, and can function to prevent short circuits between the positive and negative electrodes and allow active ions to pass through.

In some embodiments, the positive electrode may be a positive electrode plate, and the positive electrode plate may include a positive electrode current collector and a positive electrode active material disposed on at least one surface of the positive electrode current collector.

For example, the positive electrode current collector has two surfaces opposite to each other in a thickness direction of the positive electrode current collector, and the positive electrode active material layer is provided on either or both of the two opposite surfaces of the positive electrode current collector.

As an example, a metal foil or a composite current collector may be used as the positive electrode current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of the following materials: a lithium-containing phosphate, a lithium transition metal oxide, and a respective modified compound thereof.

In some embodiments, the negative electrode may be a negative electrode plate, and the negative electrode plate may include a negative electrode current collector.

As an example, the negative electrode current collector may be made of a metal foil or composite current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector can be formed by forming a metal material (copper, copper alloys, nickel, nickel alloys, titanium, titanium alloys, silver and silver alloys, etc.) on a polymer material substrate (such as substrate of polypropylene, polyethylene terephthalate, polybutylene terephthalate, polystyrene, polyethylene, etc.).

For example, the negative electrode plate may include a negative electrode current collector and a negative electrode active material provided on at least one surface of the negative electrode current collector.

As an example, the negative electrode active material may use a negative electrode active material commonly known in the art for use in battery cells. As an example, the negative electrode active material may include at least one of the following materials: artificial graphite, natural graphite, soft carbon, hard carbon, silicon-based material, tin-based material, and lithium titanate, etc.

In some embodiments, the material of the positive electrode current collector may be aluminum, and the material of the negative electrode current collector may be copper.

In some implementations, the electrode assembly further includes a spacer, the spacer being disposed between the positive electrode and the negative electrode.

In some embodiments, the spacer is a separator. The type of the separator is not particularly limited in the present application, and any well-known separator having good chemical stability, mechanical stability, and a porous structure can be selected.

As an example, the main material of the separator may be selected from at least one of glass fiber, non-woven fabric, polyethylene, polypropylene, polyvinylidene fluoride, and ceramic.

In some implementations, the spacer is a solid electrolyte. The solid electrolyte is disposed between the positive electrode and the negative electrode and functions to transport ions and isolate the positive and negative electrodes.

In some implementations, the battery cell further includes an electrolyte. The electrolyte plays a role of conducting ions between the positive electrode and the negative electrode. The type of the electrolyte is not specifically limited in the present application and can be selected according to requirements. The electrolyte may be in a liquid state, a gel state, or a solid state.

In some implementations, the electrode assembly is of a wound structure. The positive electrode plate and the negative electrode plate are wound into the wound structure.

In some implementations, the electrode assembly is of a stacked structure.

As an example, a plurality of positive electrode plates and a plurality of negative electrode plates may be provided, and the plurality of positive electrode plates and the plurality of negative electrode plates may be alternately stacked.

As an example, a plurality of positive electrode plates may be provided, and the negative electrode plate may be folded to form a plurality of stacked folded segments, with one positive electrode plate sandwiched between adjacent folded segments.

As an example, both the positive electrode plates and the negative electrode plates are folded to form a plurality of stacked folded segments.

As an example, a plurality of spacers may be provided, each disposed between any adjacent positive electrode plate or negative electrode plate.

As an example, the spacers may be continuously arranged, and may be disposed between any adjacent positive electrode plate or negative electrode plate through folding or winding.

In some implementations, the shape of the electrode assembly may be a cylinder, a flat shape, a polygon prism, or the like.

In some implementations, the electrode assembly is provided with a tab. The tab may conduct current out from the electrode assembly. The tab includes a positive tab and a negative tab.

In some implementations, the battery cell may include a shell. The shell is configured to package components such as the electrode assembly and the electrolyte. The shell may be a steel shell, an aluminum shell, a plastic shell (such as polypropylene), a composite metal shell (such as a copper-aluminum composite shell), an aluminum-plastic film, or the like. The shell includes a case and a cover plate.

For example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery. The present application has no special limitation.

The battery mentioned in the embodiments of the present application may be a single physical module including one or more battery cells to provide higher voltage and capacity. When there are a plurality of battery cells, the plurality of battery cells are connected by series connection, or parallel connection, or parallel-series connection through a bus component.

In some embodiments, the battery may be a battery module. When there are a plurality of battery cells, the plurality of battery cells are arranged and fixed to form a battery module.

In some embodiments, the battery may be a battery pack. The battery pack includes a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

Current battery cells mainly include a shell and an electrode assembly disposed inside the shell. The shell is provided with electrode terminals, and the electrode assembly is provided with tabs, the tabs being directly or indirectly electrically connected to the electrode terminals to enable leading out electrical energy from the interior of the battery cell to the outside of the battery cell.

To protect the tabs, insulating members are applied to cover the tabs in the related art. However, if the entire surface of the insulating member is adhered to the tab, the tab bonded to the insulating member may tear when the tab is bent.

In view of this, embodiments of the present application provide a battery cell. By configuring at least a portion of the transition portion of the tab not to be fixed to the insulating member, the problem of tab tearing caused by the adhesive force between the insulating member and the tab during bending of the tab can be effectively solved.

The technical solutions described in the embodiments of the present application are all applicable to various devices using batteries, such as mobile phones, portable devices, laptops, battery vehicles, electric toys, electric tools, electric vehicles, ships, spacecrafts, and the like. For example, the spacecrafts include airplanes, rockets, space shuttles, spaceships, and the like.

It should be understood that the technical solutions described in the examples of the present application are not only applicable to the devices described above, but also applicable to all devices using batteries. However, for the sake of brevity, the following embodiments are described by taking an electric vehicle as an example.

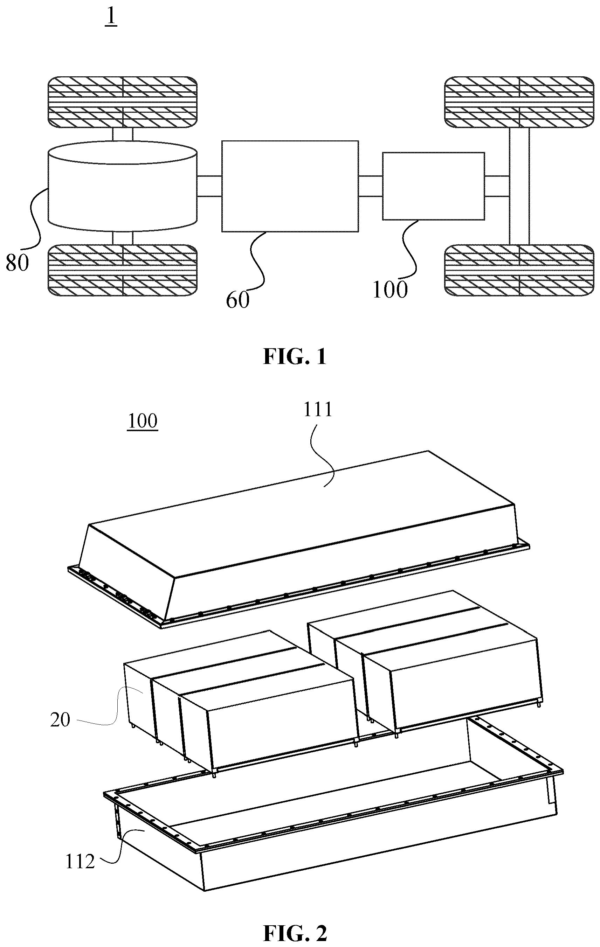

For example, as shown in FIG. 1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid vehicle, an extended range electric vehicle, or the like. A motor 80, a controller 60, and a battery 100 may be disposed inside the vehicle 1, where the controller 60 is configured to control the battery 100 to supply power to the motor 80. As an example, the battery 100 may be disposed at the bottom or the head or the tail of the vehicle 1. The battery 100 may be used for supplying power to the vehicle 1. For example, the battery 100 may be used as an operating power source of the vehicle 1, which is used for a circuit system of the vehicle 1, for example, for operation power requirements of the vehicle 1 during starting, navigation, and running. In another embodiment of the present application, the battery 100 can serve not only as an operating power supply for the vehicle 1, but also as a driving power source for the vehicle 1, so as to replace or partially replace fuel or natural air to provide driving power for the vehicle 1.

For example, as shown in FIG. 2, which is a schematic structural diagram of a battery 100 according to an embodiment of the present application, the battery 100 may include a plurality of battery cells 20. In addition to the battery cells 20, the battery 100 may further include a box body having a hollow internal structure, where a plurality of battery cells 20 can be accommodated within the box body. As shown in FIG. 2, the box body may include two portions, which are referred to as a first box body portion 111 and a second box body portion 112, respectively, where the first box body portion 111 and the second box body portion 112 are snap-fitted together. The shapes of the first box body portion 111 and the second box body portion 112 may be determined according to the combined shape of the plurality of battery cells 20, and at least one of the first box body portion 111 and the second box body portion 112 has an opening. For example, as shown in FIG. 2, only one of the first box body portion 111 and the second box body portion 112 is a hollow rectangular prism with an opening, while the other one may be of a plate shape to cover the opening. Here, taking the second box body portion 112 being a hollow rectangular prism and having only one surface being an open face and the first box body portion 111 being of a plate shape as an example, the opening of the second box body portion 112 is covered by the first box body portion 111 to form the box body 11 having an enclosed cavity that can be used for accommodating the plurality of battery cells 20. The plurality of battery cells 20 are combined in parallel, in series or in a hybrid pattern, and then placed in the box body formed by snap-fitting the first box body portion 111 to the second box body portion 112.

For another example, differing from FIG. 2, the first box body portion 111 and the second box body portion 112 may both be hollow rectangular prisms and each have only one open face. The opening of the first box body portion 111 and the opening of the second box body portion 112 are arranged opposite to each other, and the first box body portion 111 and the second box body portion 112 are snap-fitted with each other to form a box body having a sealed chamber. The plurality of battery cells 20 are combined in parallel, in series or in a hybrid pattern, and then placed in the box body formed by snap-fitting the first box body portion 111 to the second box body portion 112.

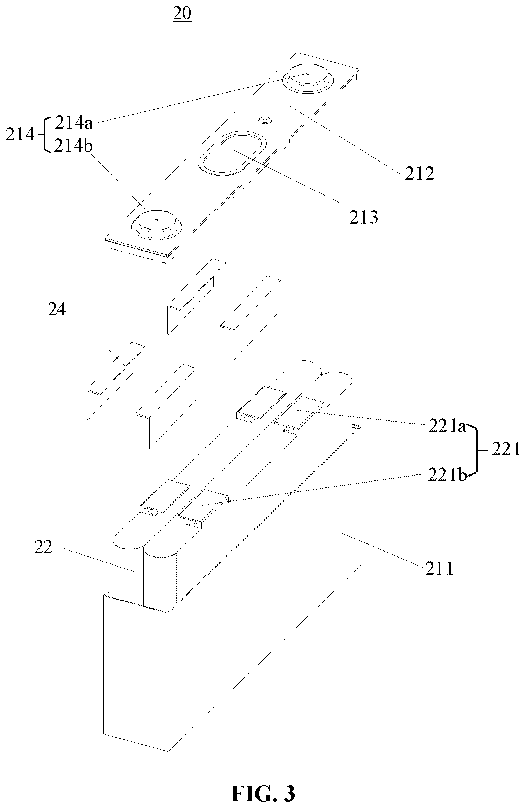

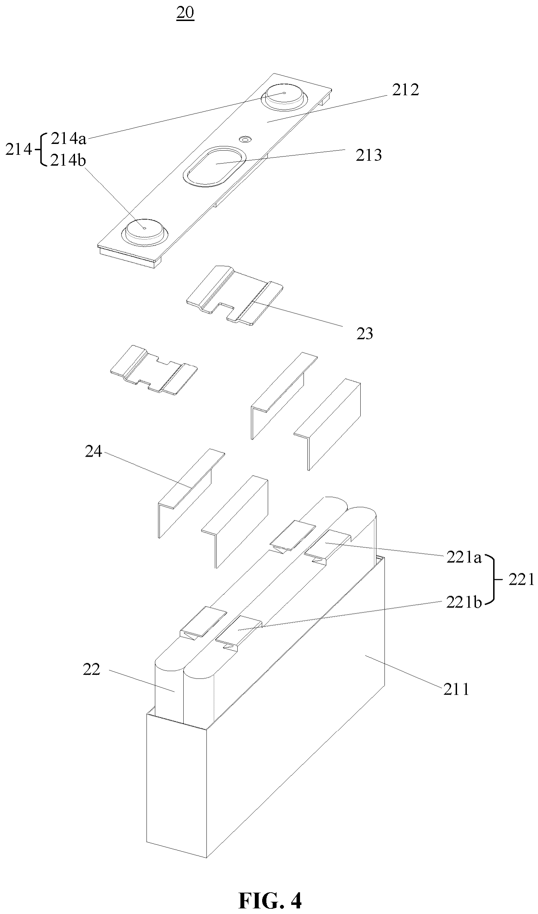

FIG. 3 illustrates a schematic exploded view of a battery cell 20 according to an embodiment of the present application. FIG. 4 illustrates a schematic exploded view of a battery cell 20 according to another embodiment of the present application.

As shown in FIGS. 3 and 4, the battery cell 20 includes one or more electrode assemblies 22, a case 211, and a cover plate 212, where the wall of the case 211 and the cover plate 212 are both referred to as walls of the battery cell 20. The case 211 is determined based on the shape of one or more electrode assemblies 22 combined together. For example, the case 211 can be a hollow rectangular prism, cube, or cylinder, and one of the faces of the case 211 has an opening to allow the one or more electrode assemblies 22 to be placed inside the case 211. For example, when the case 211 is a hollow rectangular prism or cube, one of the flat planes of the case 211 serves as the open face, meaning that this plane does not have a wall body, allowing the interior and exterior of the case 211 to communicate with each other. When the case 211 may be a hollow cylinder, the end surface of the case 211 is the open face, meaning that this end surface does not have a wall body, allowing the interior and exterior of the case 211 to communicate with each other. The cover plate 212 covers the opening and is connected to the case 211 to form a closed cavity in which the electrode assembly 22 is placed. The case 211 is filled with an electrolyte, such as an electrolyte solution.

The battery cell 20 further includes two electrode terminals 214. The cover plate 212 is generally in the shape of a flat plate, and the two electrode terminals 214 are fixed on a flat plate surface of the cover plate 212. The two electrode terminals 214 are a positive electrode terminal 214a and a negative electrode terminal 214b, respectively.

As shown in FIGS. 3 and 4, each electrode assembly 22 has tabs 221 including a first tab 221a and a second tab 221b. The first tab 221a and the second tab 221b have opposite polarities. When the first tab 221a is a positive tab, the second tab 221b is a negative tab. For example, as shown in FIG. 3, the first tab 221a of one or more electrode assemblies 22 is connected to the positive electrode terminal 214a, and the second tab 221b of the one or more electrode assemblies 22 is connected to the negative electrode terminal 214b. For another example, as shown in FIG. 4, the first tab 221a of one or more electrode assemblies 22 is connected to the positive electrode terminal 214a through one connection member 23, and the second tab 221b of the one or more electrode assemblies 22 is connected to the negative electrode terminal 214b through another connection member 23.

As an example, a pressure relief mechanism 213 may also be provided on one wall of the battery cell 20. The pressure relief mechanism 213 is configured, when an internal pressure or temperature of the battery cell 20 reaches a threshold, to be actuated to relieve the internal pressure or heat.

Optionally, the pressure relief mechanism 213 may be disposed on the cover plate 212 or on any wall of the case 211.

As shown in FIGS. 3 and 4, the battery cell 20 further includes an insulating member 24. The insulating member 24 is disposed on a bent outer side of the tab 221 and fixedly connected to the tab 221 to function to provide insulation.

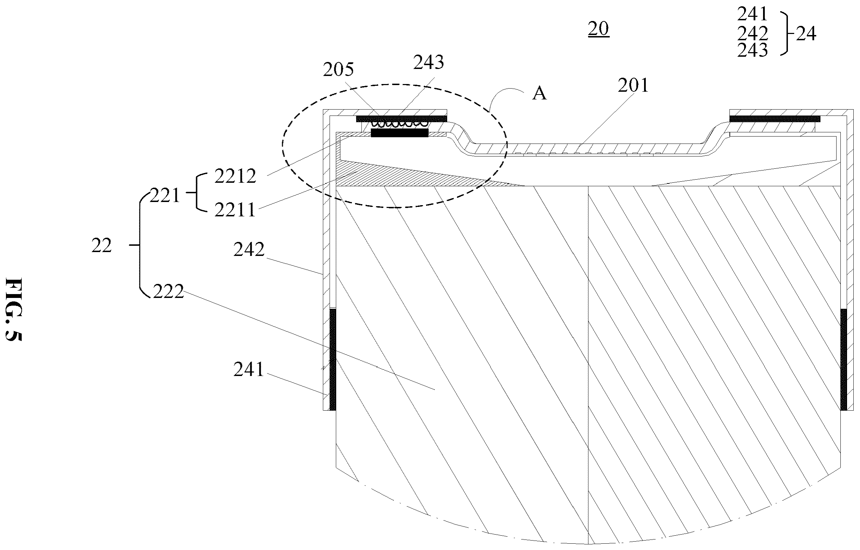

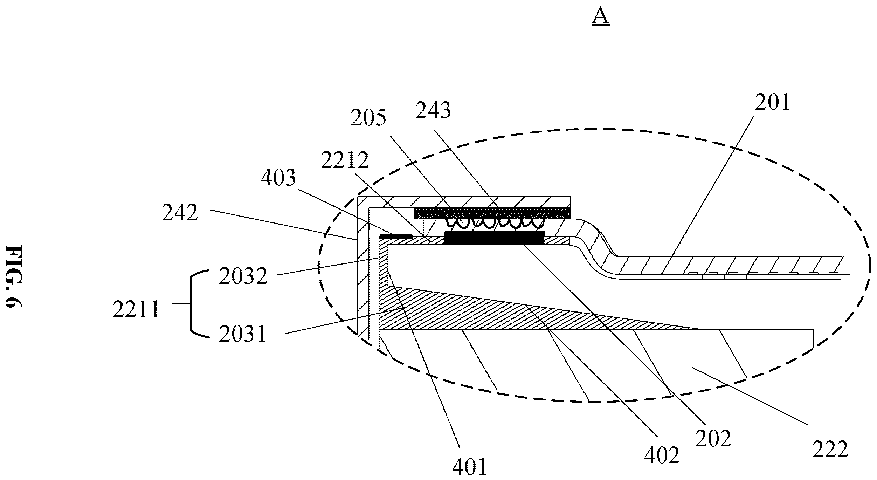

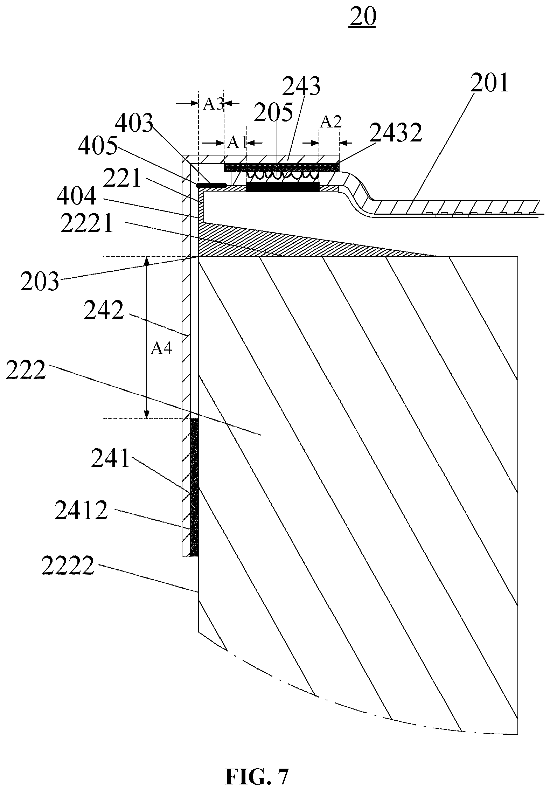

FIG. 5 illustrates a cross-sectional view of the battery cell 20 according to an embodiment of the present application. FIG. 6 is an enlarged schematic view of portion A in FIG. 5. FIG. 7 is another cross-sectional view of the battery cell 20 according to an embodiment of the present application. As shown in FIG. 5, the battery cell 20 includes: an electrode lead-out portion 201 configured to lead out electrical energy of the battery cell 20; an electrode assembly 22 including a main body 222 and a tab 221, where the tab includes a transition portion 2211 and a connection portion 2212, the connection portion 2212 being configured to be connected to the electrode lead-out portion 201, the transition portion 2211 being connected between the main body 222 and the connection portion 2212, and the transition portion 2211 being bent relative to the connection portion 2212; and an insulating member 24 disposed on a bent outer side of the tab 221, the insulating member 24 including a first insulator 241, a second insulator 242, and a third insulator 243, where the second insulator 242 is connected between the first insulator 241 and the third insulator 243, the first insulator 241 is fixed to the main body 222, the third insulator 243 is fixed to the electrode lead-out portion 201, and at least a portion of the transition portion 2211 is not fixed to the insulating member 24.

It should be understood that the electrode lead-out portion 201 is configured to lead out electrical energy of the battery cell 20 to outside the battery cell 20 and to connect in series or parallel with other battery cells. The electrode lead-out portion 201 may, as shown in FIG. 3, include the electrode terminal 214, where the tab 221 is directly electrically connected to the electrode terminal 214; or, the electrode lead-out portion 201 may, as shown in FIG. 4, include the electrode terminal 214 and the connection member 23, where the tab 221 is electrically connected to the electrode terminal 214 through the connection member 23. In some embodiments, after the connection portion 2212 of the tab 221 is welded to the electrode lead-out portion 201, a fusion zone 202 may be formed.

Typically, the electrode assembly 22 is formed through overlapping of a plurality of electrode plates. Each electrode plate includes a current collector and an active material coated on a surface of the current collector. The portion coated with active material can be understood as the main body 222 of the electrode assembly 22, while the portion not coated with active material can be understood as the tab 221 of the electrode assembly 22. That is, portions of the plurality of electrode plates that are coated with active material form the main body 222, and portions of the plurality of electrode plates that are not coated with active material form the tab 221. Additionally, since each electrode plate has a portion not coated with active material, the portions of the plurality of electrode plates that are not coated with active material need to be gathered before being electrically connected to the electrode lead-out portion 201. The portions of the plurality of electrode plates that are not coated with active material are gathered and then bent to form two portions, i.e., the transition portion 2211 and the connection portion 2212, and the transition portion 2211 is bent relative to the connection portion 2212.

In some embodiments, as shown in FIG. 7, the tab 221 may extend from the first end surface 2221 of the main body 222. After bending, the connection portion 2212 of the tab 221 may be arranged opposite to the first end surface 2221.

It should be clarified that, for the insulating member 24 extending along a direction perpendicular to the first end surface 2221, the insulating member 24 being disposed on the bent outer side of the tab 221 may mean that the insulating member 24 is disposed on a side of the tab 221 that is opposite to the bending direction of the connection portion 2212. For the insulating member 24 extending along a direction perpendicular to the first side surface 2222, the insulating member 24 is disposed on a side of the electrode lead-out portion 201 that is away from the connection portion 2212. In some embodiments, the first insulator 241 may be fixed to at least a portion of the first side surface 2222 of the main body 222. In some other embodiments, the third insulator 243 may be fixed to a portion of the electrode lead-out portion 201 at the weld mark area 205. The second insulator 242 connects the first insulator 241 and the third insulator 243, forming the insulating member 24 as an integral structure. At least a portion of the transition portion 2211 is not fixed to the insulating member 24, which can be understood as at least a portion of the surface of the insulating member that faces the transition portion 2211 being exposed.

In some embodiments, the exposed portion of the surface of the insulating member 24 that faces the tab 221 may only cover a portion of the transition portion 2211. In other embodiments, the exposed portion of the surface of the insulating member 24 that faces the tab 221 may also cover the entirety of transition portion 2211.

In the embodiment of the present application, by providing the second insulator 242 between the first insulator 241 and the third insulator 243 to connect the first insulator 241 and the third insulator 243 together, the connection strength between the first insulator 241 and the third insulator 243 on the electrode assembly 22 can be improved, thereby lowering the risk of detachment. Further, by configuring at least a portion of the transition portion 2211 of the tab 221 not to be fixed to the insulating member 24, the pulling force applied by the insulating member 24 to the tab 221 can be reduced during bending of the tab 221, which is advantageous for mitigating the problem of tab tearing during bending of the tab 221.

In some embodiments, at least a portion of the transition portion 2211 is not fixed to the second insulator 242.

As shown in FIGS. 5 to 7, the second insulator 242 covers at least a portion of the transition portion 2211. Therefore, at least a portion of the transition portion 2211 is not fixed to the insulating member 24, which can also be understood as at least a portion of the transition portion 2211 not being fixed to the second insulator 242.

In this embodiment, by configuring at least a portion of the transition portion 2211 of the tab 221 not to be fixed to the second insulator 242, stress can be released from the tab 221 during bending of the tab 221, so as to reduce the pulling force applied by the insulating member 24 to the tab 221, thereby lowering the risk of tab 221 fracture.

In some embodiments, as shown in FIG. 6, the transition portion 2211 includes a first portion 2031 and a second portion 2032, the first portion 2031 being connected to the main body 222, the second portion 2032 being connected between the connection portion 2212 and the first portion 2031, an inner surface 401 of the second portion 2032 being bent relative to an inner surface 402 of the first portion 2031, and the second portion 2032 being not fixed to the second insulator 242.

It should be noted that the inner surface 401 of the second portion 2032 is bent relative to the inner surface 402 of the first portion 2031, which may also mean that an angle exists between the inner surface 401 of the second portion 2032 and the inner surface 402 of the first portion 2031.

In some embodiments, as shown in FIGS. 5 to 7, an outer surface of the second portion 2032 and an outer surface of the first portion 2031 may lie in the same plane. For example, the outer surface of the second portion 2032 and the outer surface of the first portion 2031 may lie in the same plane as the first side surface 2222 of the main body 222. That is, the outer surface 404 of the transition portion 2211 lies in the same plane as the first side surface 2222 of the main body 222.

In this embodiment, since the connection site between the second portion 2032 and the connection portion 2212 serves as a bending point, configuring the second portion 2032 not to be fixed to the second insulator 242 can sufficiently release the pulling force applied by the insulating member 24 to the bent part of the tab 221, thereby reducing the risk of tearing the tab 221 during bending of the tab 221 as much as possible.

In some embodiments, an entirety of the transition portion 2211 is not fixed to the second insulator 242.

That is, not only the second portion 2032 of the transition portion 2211 is not fixed to the second insulator 242, but the first portion 2031 of the transition portion 2211 is also not fixed to the second insulator 242.

In this embodiment, by configuring the entire transition portion 2211 not to be fixed to the second insulator 242, the pulling force applied by the insulating member 24 to the tab 221 can be substantially released during bending of the tab 221, thereby lowering the risk of tab 221 fracture.

In some embodiments, an edge portion 403 of the connection portion 2212 that is connected to the transition portion 2211 is not fixed to the second insulator 242.

In other words, in a direction perpendicular to the first side surface 2222, the third insulator 243 is spaced apart from the bending point 405 between the transition portion 2211 and the connection portion 2212.

It should be noted that, for illustrative purposes, FIG. 6 only indicates the edge of the inner surface of the connection portion 2212 as the edge portion 403, but those skilled in the art will understand that the edge portion 403 should be a three-dimensional structure.

In this embodiment, by configuring not only the second portion 2032 not to be fixed to the second insulator 242 but also the edge portion 403 of the connection portion 2212 that is connected to the second portion 2032 not to be fixed to the second insulator 242, the pulling force applied by the insulating member 24 to the tab 221 can be better released, thereby further lowering the risk of tab 221 fracture.

In some embodiments, the first insulator 241 is fixed on the first side surface 2222, and in a direction perpendicular to the first side surface 2222, a dimension A3 of the edge portion 403 is greater than or equal to 2 mm.

As shown in FIG. 7, in the direction perpendicular to the first side surface 2222, the dimension A3 of the edge portion 403 is greater than or equal to 2 mm.

In some examples, the dimension A3 of the edge portion 403 equals 2 mm, 3 mm, 4 mm, etc.

In this embodiment, by configuring the dimension A3 of the edge portion 403 to be greater than or equal to 2 mm, the pulling force applied by the insulating member 24 to the tab 221 can be further reduced, thereby reducing the risk of tab 221 fracture.

In some embodiments, the connection portion 2212 is welded to the electrode lead-out portion 201 and forms a weld mark area 205 on a surface of the electrode lead-out portion 201, and the third insulator 243 covers the weld mark area 205.

For example, an orthographic projection of the weld mark area 205 on the first end surface 2221 is located within an orthographic projection of the third insulator 243 on the first end surface 2221.

In some embodiments, the connection portion 2212 and the electrode lead-out portion 201 may be connected through ultrasonic welding. For example, a welding head is disposed on a side of the connection portion 2212 that is away from the electrode lead-out portion 201, and a welding anvil is disposed on a side of the electrode lead-out portion 201 that is away from the connection portion 2212. When welding the connection portion 2212 and the electrode lead-out portion 201, the welding head and the welding anvil clamp the connection portion 2212 and the electrode lead-out portion 201, and form a fusion zone 202 between the electrode lead-out portion 201 and the connection portion 2212. The fusion zone 202 may be exposed on a surface of the connection portion 2212 that is close to the main body 222, while the welding anvil forms some recesses or protrusions, i.e., the weld mark area 205, on a surface of the electrode lead-out portion 201 that is away from the connection portion 2212. It should be noted that the weld mark area 205 corresponds in position to the fusion zone 202.

In this embodiment, by configuring the third insulator 243 to cover the weld mark area 205, the third insulator 243 can hold metal debris within the weld mark area 205 at the weld mark area 205, which is advantageous for lowering the probability of short circuits in the battery cell 20 caused by escape of the metal debris.

In some embodiments, the third insulator 243 extends beyond the weld mark area 205.

It should be noted that although FIG. 7 only illustrates the situation where the third insulator 243 extends beyond the weld mark area 205 in the direction perpendicular to the first side surface 2222, those skilled in the art will understand that the third insulator 243 extending beyond the weld mark area 205 in the embodiments of the present application may mean that the third insulator 243 extends beyond the weld mark area 205 in all directions on a plane parallel to the first end surface 2221.

In this embodiment, by configuring the third insulator 243 to extend beyond the weld mark area 205, the metal debris within the weld mark area 205 can be enclosed within the weld mark area 205, thereby lowering the probability of short circuits in the battery cell 20 caused by escape of the metal debris.

In other embodiments, the connection portion 2212 and the electrode lead-out portion 201 may also be connected through laser welding.

In some embodiments, a dimension by which the third insulator 243 extends beyond the weld mark area 205 is greater than or equal to 2 mm.

In some examples, the dimension by which the third insulator 243 extends beyond the weld mark area 205 equals 2 mm, 3 mm, 4 mm, etc. For example, A1 in FIG. 7 equals 3 mm. For another example, A2 in FIG. 7 equals 2 mm.

In this embodiment, by configuring the dimension by which the third insulator 243 extends beyond the weld mark area 205 to be greater than or equal to 2 mm, the third insulator 243 can cover the weld mark area 205 as much as possible, thereby reducing the problem of exposure of the weld mark area 205 caused by insufficient bonding strength between the third insulator 243 and the portion of the electrode lead-out portion 201 at the weld mark area 205.

In some embodiments, the first insulator 241 fixed to the first side surface 2222 of the main body 222 is spaced apart from a first connection site 203, the first connection site 203 being a connection site between an outer surface 404 of the tab 221 and the first side surface 2222.

In this embodiment, since the first connection site 203 is a stress concentration point between the tab 221 and the main body 222, arranging the first insulator 241 fixed to the first side surface 2222 to be spaced apart from the first connection site 203 allows the first connection site 203 to be covered by the second insulator 242 and unfixed to the insulating member 24, thereby reducing, during bending of the tab 221, the pulling force applied by the insulating member 24 to the first connection site 203, and consequently lowering the risk of tab 221 fracture.

In some embodiments, a distance from the first insulator 241 fixed to the first side surface 2222 to the first connection site 203 is greater than or equal to 2 mm.

In some examples, the distance from the first insulator 241 fixed to the first side surface 2222 to the first connection site 203 equals 2 mm, 3 mm, 4 mm, etc. For example, A4 in FIG. 7 equals 4 mm.

In this embodiment, by configuring the distance from the first insulator 241 fixed to the first side surface 2222 to the first connection site 203 to be greater than or equal to 2 mm, the pulling force applied by the insulating member 24 to the tab 221 can be further reduced, thereby lowering the risk of tab 221 fracture.

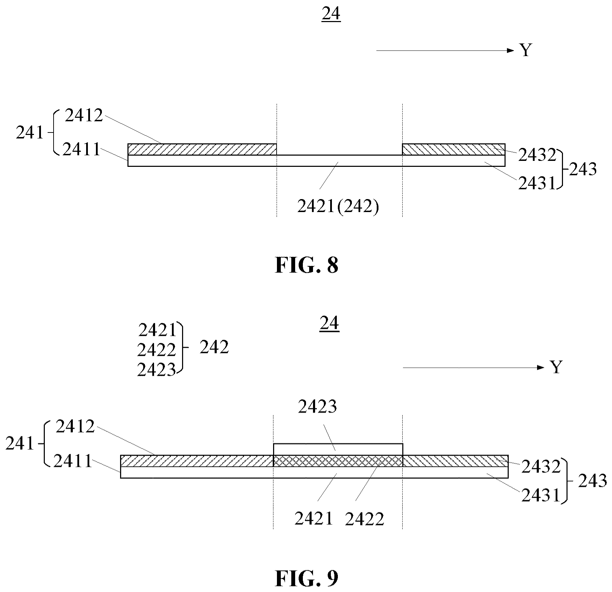

FIG. 8 illustrates a schematic cross-sectional view of an insulating member 24 in an unfolded state according to an embodiment of the present application. FIG. 9 illustrates a schematic cross-sectional view of another insulating member 24 in an unfolded state according to an embodiment of the present application.

As shown in FIG. 8, the first insulator 241 includes a first insulating layer 2411 and a first adhesive coating 2412, and the third insulator 243 includes a third insulating layer 2431 and a third adhesive coating 2432, where the first insulating layer 2411 is bonded to the main body 222 through the first adhesive coating 2412, and the third insulating layer 2431 is bonded to the connection portion 2212 through the third adhesive coating 2432; and the second insulator 242 includes a second insulating layer 2421, where a surface of the second insulating layer 2421 that faces the tab 221 is exposed.

It should be understood that the exposure of the surface of the second insulating layer 2421 that faces the tab 221 means that no adhesive coating is provided on the side of the second insulating layer 2421 that faces the tab 221.

In this embodiment, by configuring the surface of the second insulating layer 2421 that faces the tab 221 to be exposed, at least a portion of the transition portion 2211 of the tab 221 can be unfixed to the second insulator 242, which can consequently reduce, during bending of the tab 221, the pulling force applied by the insulating member 24 to the tab 221, thereby lowering the risk of tab 221 fracture. Additionally, the material usage of the adhesive coating can be reduced, thereby lowering costs.

As shown in FIG. 9, the first insulator 241 includes a first insulating layer 2411 and a first adhesive coating 2412, the second insulator 242 includes a second insulating layer 2421 and a second adhesive coating 2422, and the third insulator 243 includes a third insulating layer 2431 and a third adhesive coating 2432; and the second insulator 242 further includes a fourth insulating layer 2423, where the fourth insulating layer 2423 is bonded to the second insulating layer 2421 through the second adhesive coating 2422, and a surface of the fourth insulating layer 2423 that faces the tab 221 is exposed.

It should be understood that the exposure of the surface of the fourth insulating layer 2423 that faces the tab 221 means that no adhesive coating is provided on the side of the fourth insulating layer 2423 that faces the tab 221.

In this embodiment, by bonding the fourth insulating layer 2423 to the second adhesive coating 2422 and exposing its surface facing the tab 221, a portion of the tab 221 from the first connection site 203 to the second connection site 204 can be unfixed to the second insulator 242, which can consequently reduce, during bending of the tab 221, the pulling force applied by the insulating member 24 to the tab 221, thereby lowering the risk of tab 221 fracture. Additionally, only the position corresponding to at least a portion of the transition portion 2211 of the tab 221 needs to be attached with the fourth insulating layer 2423, thereby reducing the manufacturing complexity of the insulating member 24.

The material of the insulating layers in the embodiments of the present application may include at least one of PP, PE, or PET materials. The thickness range of the insulating layer plus the adhesive coating may be 0.001 mm to 0.5 mm. For example, the thickness of the first insulator 241, the thickness of the second insulator 242 excluding the fourth insulating layer 2423 in FIG. 9, and the thickness of the third insulator 243 all fall within the range of 0.001 mm to 0.5 mm.

In some embodiments, the third insulator 243 is spaced apart from the bending point 405 between the transition portion 2211 and the connection portion 2212, which can also be understood as the third adhesive coating 2432 being spaced apart from the bending point 405. Similarly, in some other embodiments, the first insulator 241 is spaced apart from the first connection site 203, which can also be understood as the first adhesive coating 2412 being spaced apart from the first connection site 203.

In some embodiments, the second insulator 242 is of a transparent structure.

In this embodiment, by configuring the second insulator 242 as a transparent structure, monitoring whether cracks develop in the tab 221 is facilitated, thereby enabling timely screening of defective battery cells 20.

In some other embodiments, the first insulator 241 and/or the third insulator 243 is of a non-transparent structure. Further, the non-transparent structure of the first insulator 241 and/or the third insulator 243 may be achieved by configuring the first adhesive coating 2412 and/or the third adhesive coating 2432 to have non-transparent colors.

For example, both the first insulator 241 and the third insulator 243 are blue. For another example, the first adhesive coating 2412 and the third adhesive coating 2432 are blue.

In this embodiment, by configuring the first insulator 241 and/or the third insulator 243 as a non-transparent structure, recognition of the insulating member 24 by a charge coupled device (CCD) camera is facilitated, thereby achieving the purpose of reducing repeated fixing of insulating members 24.

In some embodiments, the first insulator 241 and the third insulator 243 have different colors. For example, the color of the first insulator 241 is yellow, and the color of the third insulator 243 is blue. Further, the different colors of the first insulator 241 and the third insulator 243 may be achieved by configuring the first adhesive coating 2412 and the third adhesive coating 2432 to have different colors.

In some other embodiments, the first insulator 241 and the third insulator 243 have the same color. For example, the colors of both the first insulator 241 and the third insulator 243 are blue. Further, the first insulator 241 and the third insulator 243 having the same color may be achieved by configuring the first adhesive coating 2412 and the third adhesive coating 2432 to have the same color.

In some embodiments, the first insulating layer 2411 in the first insulator 241, the second insulating layer 2421 in the second insulator 242, and the third insulating layer 2431 in the third insulator 243 may be integrally molded.

In some other embodiments, at least one of the first insulator 241, the second insulator 242, and the third insulator 243 is individually molded.

In other embodiments, the first insulator 241 may also be fixed to the main body 222 through thermal fusion, and the third insulator 243 may also be fixed to the electrode lead-out portion 201 through thermal fusion.

As shown in FIG. 3, the electrode lead-out portion 201 may include an electrode terminal 214, the electrode terminal 214 being welded to the connection portion 2212; or, as shown in FIG. 4, the electrode lead-out portion 201 may include an electrode terminal 214 and a connection member 23, where the connection portion 2212 is electrically connected to the electrode terminal 214 through the connection member 23, and the connection portion 2212 is welded to the connection member 23.

In this embodiment, the electrode terminal 214 is directly welded to the connection portion 2212 without the need of using a connection member 23 for connection, enabling cost reduction while improving spatial utilization of the battery cell 20. Additionally, the connection portion 2212 is connected to the electrode terminal 214 through the connection member 23, thereby facilitating the connection between the tab 221 and the electrode terminal 214.

In some embodiments, the electrode lead-out portion 201 may be disposed on a first wall of a shell of the battery cell 20, and the tab 221 extends from a first end surface 2221 of the electrode assembly 22, the first end surface 2221 being disposed opposite to the first wall.

Optionally, this first wall may be any wall of the shell of the battery cell 20. For example, the electrode lead-out portion 201 is disposed on the cover plate 212 in FIGS. 3 and 4.

In this embodiment, by disposing the electrode lead-out portion 201 on the first wall opposite to the first end surface 2221, the space occupied by the tab 221 can be significantly reduced.

In some embodiments, the battery cell 20 may include a plurality of electrode assemblies 22, for example, including two adjacent electrode assemblies 22, where the two adjacent electrode assemblies 22 may share one electrode lead-out portion 201. Additionally, each electrode assembly 22 may be provided with the insulating member 24 as described in the various embodiments above.

Referring again to FIGS. 3 to 9, an embodiment of the present application provides a battery cell 20, including: an electrode lead-out portion 201 configured to lead out electrical energy of the battery cell 20; an electrode assembly 22 including a main body 222 and a tab 221 extending from a first end surface 2221 of the main body 222, where the tab 221 includes a transition portion 2211 and a connection portion 2212, the transition portion 2211 being connected between the main body 222 and the connection portion 2212, the transition portion 2211 being bent relative to the connection portion 2212, and the connection portion 2212 being configured to be welded to the electrode lead-out portion 201 and forming a weld mark area 205 on a surface of the electrode lead-out portion 201; an insulating member 24 disposed on a bent outer side of the tab 221, the insulating member 24 including a first insulator 241, a second insulator 242, and a third insulator 243, where the first insulator 241 is fixed to a first side surface 2222 of the main body 222, the third insulator 243 is fixed to the electrode lead-out portion 201, and the third insulator 243 covers and extends beyond the weld mark area by at least 2 mm, where an entirety of the transition portion 2211 is not fixed to the second insulator 242, and an edge portion 403 of the connection portion 2212 that is connected to the transition portion 2211 is also not fixed to the second insulator 242, and a dimension of the edge portion 403 is greater than or equal to 2 mm, and in addition, a distance from the first insulator 241 to a first connection site 203 is greater than or equal to 2 mm, the first connection site 203 being a connection site between an outer surface of the tab 221 and the first side surface 2222, and the first insulator 241 and the third insulator 243 have non-transparent colors, and the second insulator 242 has a transparent color.

In this embodiment, by configuring the entirety of the transition portion 2211 not to be fixed to the second insulator 242, the edge portion 403 of the connection portion 2212 that is connected to the transition portion 2211 not to be fixed to the second insulator 242, and the distance from the first insulator 241 to the first connection site 203 to be greater than or equal to 2 mm, the problem of tearing of the tab 221 caused by the adhesive force between the insulating member 24 and the tab 221 during bending of the tab 221 can be solved. Additionally, by configuring the third insulator 243 to extend beyond the weld mark area 205 by a dimensions of more than 2 mm, the problem of exposure of the weld mark area 205 due to insufficient bonding strength between the third insulator 243 and the portion of the electrode lead-out portion 201 at the weld mark area 205 can be reduced. Finally, by configuring the first insulator 241 and the third insulator 243 to have non-transparent colors and the second insulator 242 to have a transparent color, recognition of the insulating member 24 by a charge coupled device (CCD) camera is facilitated while enabling monitoring of whether cracks develop in the tab 221, thereby enabling timely screening of defective battery cells 20.

Embodiments of the present application further provide a battery, the battery including the battery cell 20 of the embodiments of the present application.

Embodiments of the present application further provide an electrical apparatus including the battery according to the aforementioned embodiments, the battery being configured to supply electrical energy to the electrical apparatus.

The electrical apparatus may be a vehicle as shown in FIG. 1 or any apparatus utilizing a battery.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, comprising:
an electrode lead-out portion configured to lead out electrical energy of the battery cell;
an electrode assembly comprising a main body and a tab, wherein the tab comprises a transition portion and a connection portion, the connection portion being configured to be connected to the electrode lead-out portion, the transition portion being connected between the main body and the connection portion, and the transition portion being bent relative to the connection portion; and
an insulating member disposed on a bent outer side of the tab, the insulating member comprising a first insulator, a second insulator, and a third insulator, wherein the second insulator is connected between the first insulator and the third insulator, the first insulator is fixed to the main body, the third insulator is fixed to the electrode lead-out portion, and at least a portion of the transition portion is not fixed to the insulating member.

2. The battery cell according to claim 1, wherein at least a portion of the transition portion is not fixed to the second insulator.

3. The battery cell according to claim 2, wherein the transition portion comprises a first portion and a second portion, the first portion being connected to the main body, the second portion being connected between the connection portion and the first portion, an inner surface of the second portion being bent relative to an inner surface of the first portion, and the second portion being not fixed to the second insulator.

4. The battery cell according to claim 2 or 3, wherein an entirety of the transition portion is not fixed to the second insulator.

5. The battery cell according to any one of claims 2 to 4, wherein an edge portion of the connection portion connected to the transition portion is not fixed to the second insulator.

6. The battery cell according to claim 5, wherein the first insulator is fixed to a first side surface of the main body, and in a direction perpendicular to the first side surface, a dimension of the edge portion is greater than or equal to 2 mm.

7. The battery cell according to any one of claims 1 to 6, wherein the connection portion is welded to the electrode lead-out portion and forms a weld mark area on a surface of the electrode lead-out portion, and the third insulator covers the weld mark area.

8. The battery cell according to claim 6, wherein the third insulator extends beyond the weld mark area.

9. The battery cell according to any one of claims 1 to 7, wherein the first insulator fixed to the first side surface of the main body is spaced apart from a first connection site, the first connection site being a connection site between an outer surface of the tab and the first side surface.

10. The battery cell according to claim 9, wherein a distance from the first insulator to the first connection site is greater than or equal to 2 mm.

11. The battery cell according to any one of claims 1 to 10, wherein the first insulator comprises a first insulating layer and a first adhesive coating, and the third insulator comprises a third insulating layer and a third adhesive coating, wherein the first insulating layer is bonded to the main body through the first adhesive coating, and the third insulating layer is bonded to the electrode lead-out portion through the third adhesive coating; and
the second insulator comprises a second insulating layer, wherein a surface of the second insulating layer that faces the tab is exposed.

12. The battery cell according to any one of claims 1 to 10, wherein the first insulator comprises a first insulating layer and a first adhesive coating, the second insulator comprises a second insulating layer and a second adhesive coating, and the third insulator comprises a third insulating layer and a third adhesive coating; and the second insulator further comprises a fourth insulating layer, wherein the fourth insulating layer is bonded to the second insulating layer through the second adhesive coating, and a surface of the fourth insulating layer that faces the tab is exposed.

13. The battery cell according to any one of claims 1 to 12, wherein the second insulator is of a transparent structure.

14. The battery cell according to any one of claims 1 to 13, wherein the first insulator and/or the third insulator is of a non-transparent structure.

15. The battery cell according to any one of claims 1 to 14, wherein the electrode lead-out portion comprises an electrode terminal, the electrode terminal being welded to the connection portion; or
the electrode lead-out portion comprises an electrode terminal and a connection member, wherein the connection portion is electrically connected to the electrode terminal through the connection member, and the connection portion is welded to the connection member.

16. The battery cell according to any one of claims 1 to 15, wherein the electrode lead-out portion is disposed on a first wall of a shell of the battery cell, and the tab extends from a first end surface of the electrode assembly, the first end surface being disposed opposite to the first wall.

17. A battery, comprising the battery cell according to any one of claims 1 to 16.

18. An electrical apparatus, comprising the battery according to claim 17, the battery being configured to supply electrical energy to the electrical apparatus.
